# FASCICULE DE BREVET EUROPEEN

(11) **EP 0 941 520 B1**
(45) Date de publication et mention de la délivrance du brevet: **05.09.2001**
(21) Numéro de dépôt: 97947110.9
(22) Date de dépôt: 20.11.1997
(51) Int. Cl.: G06K 19/077

(54) **CARTE A MEMOIRE DU TYPE SANS CONTACT**
KONTAKTLOSE SPEICHERKARTE
CONTACTLESS CHIP CARD

(30) Priorité: 29.11.1996 FR 9614663
(43) Date de publication de la demande: 15.09.1999
(73) Titulaire: SCHLUMBERGER Systèmes, 92120 Montrouge (FR)
(72) Inventeur: THEVENOT, Benoît, F-45160 Olivet (FR); BILLEBAUD, Pascal, F-45000 Orléans (FR)
(74) Mandataire: Jaunez, Xavier
(86) Numéro de dépôt international: FR9702100
(87) Numéro de publication internationale: WO9824057

(56) Documents cités:
- EP-A- 0 671 705
- EP-A- 0 682 321
- EP-A- 0 737 935
- DE-A- 4 431 605

## Description

La présente invention concerne le domaine des cartes à mémoire du type sans contact. De telles cartes sont couramment utilisées pour constituer par exemple des badges ou des cartes de péage à distance.

Les cartes à mémoire sans contact comportent habituellement un circuit intégré et un organe de couplage associé, tous deux noyés dans un ensemble plat isolant, Le type particulier de carte à mémoire sans contact auquel se rapporte l'invention est représenté par les cartes comportant un corps de carte en matière plastique dans une face duquel est enchâssé un circuit intégré, avec sur cette face une antenne de couplage reliée à deux plots de contact du circuit intégré, et une feuille de protection isolante recouvrant ladite face du corps de carte.

Dans la pratique, l'antenne est organisée selon un motif spiralé dont les deux extrémités sont reliées à deux plots de contact du circuit intégré. L'extrémité la plus à l'intérieur du motif spiralé peut aisément être reliée à l'un des deux plots de contact, par contre, pour l'extrémité la plus à l'extérieur, il est nécessaire de prévoir une liaison de raccordement qui passe au-dessus des spires formant l'antenne. Ce mode d'agencement est rendu nécessaire pour avoir une largeur aussi importante que possible pour la piste conductrice formant l'antenne, la recherche d'une piste très large étant liée à la recherche d'une résistance électrique aussi faible que possible, afin d'avoir le facteur de qualité le plus élevé pour l'antenne (le facteur de qualité correspondant au rapport entre l'impédance et la résistance). La réalisation d'antennes par dépôt d'une pâte conductrice par sérigraphie est bien connue et tout à fait maîtrisée. Cependant, de telles pâtes présentent une résistivité importante, ce qui donne des antennes dont la résistance électrique (pure) est élevée, atteignant plusieurs dizaines d'ohms. C'est pour cela que l'on utilise de plus en plus des antennes constituées de pistes sérigraphiées très larges, ayant une section maximale, afin d'en diminuer la résistance électrique. L'obtention d'un raccordement au circuit intégré par des liaisons conductrices situées sur deux niveaux superposés oblige ainsi les constructeurs à prévoir d'une part un pontage conducteur reliant l'extrémité la plus à l'extérieur de l'antenne à l'un des plots de contact du circuit intégré, et d'autre part, pour éviter le contact avec les spires enjambées, un isolant disposé sur la zone concernée des spires, isolant sur lequel est déposé le pontage conducteur. Bien que la technique de sérigraphie permette de réaliser successivement ces différents niveaux avec des cadences importantes, il n'en reste pas moins que trois étapes sont nécessaires, et que les précisions exigées sont élevées, ce qui induit un coût de fabrication encore élevé.

L'invention concerne plus particulièrement une carte à mémoire du type sans contact, comportant un corps de carte en matière plastique dans une face duquel est enchâssé un circuit intégré, avec sur cette face une antenne de couplage reliée à deux plots de contact du circuit intégré, et organisée selon un motif spiralé dont les spires passent sur la face affleurante du circuit intégré, et une feuille de protection isolante recouvrant ladite face du corps de carte, conformément au préambule de la revendication 1.

Un tel type de carte est décrit dans les documents DE-A-44 31 605 et BP-A-0 682 321.

On connaît par ailleurs du document EP-A-0 737 935 une carte sans contact ayant une couche interne supportant une antenne spiralée et un circuit intégré chevauchant les spires de l'antenne. Les extrémités externe et interne de l'antenne sont connectées chacune à un plot par l'intermédiaire d'une couche isolante s'étendant entre les spires et la face du circuit intégré et rendue localement conductrice à l'aplomb de chaque plot. La largeur de l'antenne peut être localement réduite en resserrant localement les spires qui constituent ladite antenne entre les plots de connexion, la largeur des spires restant inchangée au niveau de la zone de resserrement.

On pourra enfin se référer au document EP-A-0 671 705 qui décrit quant à lui une carte à connexion mixte comportant une antenne spiralée et un circuit intégré disposé au-dessus des spires de cette antenne, lequel circuit est raccordé aux extrémités de l'antenne par des éléments de connexion associés.

Les cartes réalisées selon l'un ou l'autre des documents précités ont une structure complexe engendrant des coûts de fabrication élevés.

L'invention a précisément pour but de résoudre ce problème, en concevant un agencement différent permettant de simplifier la fabrication et de diminuer les coûts de production, sans perte notable pour le facteur de qualité par rapport aux cartes sans contact existantes.

L'invention a ainsi pour objet de réaliser une carte à mémoire dont la structure permet de réduire au minimum les étapes de fabrication, et d'avoir un coût de production très compétitif pour un facteur de qualité au moins comparable à celui des cartes à mémoire existantes dont l'antenne est réalisée en trois étapes successives de sérigraphie.

Ce problème est résolu conformément à l'invention grâce à une carte à mémoire du type précité, dans laquelle l'antenne est constituée par une piste conductrice dont la largeur est localement réduite dans une zone de la face du corps de carte entourant directement le circuit intégré jusqu'à son raccordement à des lignes conductrices très étroites par rapport à la piste conductrice extérieure à ladite zone, qui sont agencées sur la face affleurante du circuit intégré et qui passent entre les deux plots de contact dudit circuit intégré, conformément à la partie caractérisante de la revendication 1.

Un tel agencement d'antenne permet ainsi d'avoir un profil continu passant sur la face affleurante du circuit intégré, et la carte ainsi réalisée a une structure simple de sorte que sa fabrication est relativement peu coûteuse.

De plus, l'étroitesse des lignes conductrices facilite la réalisation de celles-ci sur la face affleurante du circuit intégré entre les deux plots de contact. En outre, la. réduction locale de la largeur de ces pistes conductrices n'entraîne qu'une augmentation limitée de la résistance de l'antenne permettant l'obtention d'un facteur de qualité élevé.

De préférence, la piste conductrice formant l'antenne présente, dans la zone précitée, pour chacune de ses spires, une largeur progressivement décroissante pour leur raccordement aux lignes conductrices passant entre lesdits plots de contact. En particulier, la piste conductrice formant l'antenne peut aussi présenter dans la zone précitée une largeur progressivement décroissante pour la liaison aux plots de contact du circuit intégré.

La largeur localement réduite dans une zone prédéterminée entourant directement le circuit intégré permet justement un raccordement à des lignes conductrices très étroites. Cette zone sera choisie aussi restreinte que possible afin que l'augmentation de résistance qui résulte de la diminution locale de la section soit aussi peu sensible que possible par rapport à la résistance que présenterait une antenne traditionnelle de même longueur.

Conformément à un mode d'exécution particulier, la largeur de la piste conductrice peut atteindre 3 mm en dehors de la zone précitée, et descend à environ 0,2 mm à l'intérieur de ladite zone et au niveau des lignes conductrices agencées sur la face affleurante du circuit intégré. La longueur des tronçons de la piste conductrice dont la résistance électrique est augmentée représentera de préférence au plus 10 % de la longueur totale de ladite piste conductrice.

La piste conductrice pourra être réalisée dans son intégralité en polymère conducteur déposé par sérigraphie. Dans ce cas, une seule étape de fabrication suffit pour réaliser directement l'ensemble de l'antenne.

Selon une première variante, on pourra prévoir que la face affleurante du circuit intégré présente un motif de lignes conductrices avec à leurs extrémités des pastilles de connexion, l'ensemble de ces lignes et pastilles étant réalisé par métallisation, et que la partie restante de la piste conductrice est quant à elle réalisée en polymère conducteur déposé par sérigraphie sur la face du corps de carte. Dans ce cas, on doit mettre en oeuvre deux étapes successives de fabrication, mais on parvient à obtenir une résistivité notablement plus faible grâce à la métallisation, laquelle étape de métallisation peut d'ailleurs être mise en oeuvre sur les galettes de silicium elles-mêmes avant le découpage de celles-ci visant à constituer des circuits intégrés. Ceci permet alors de métalliser en une seule fois des dizaines de milliers de circuits intégrés.

Selon une autre variante, on pourra prévoir que la partie de la piste conductrice qui est en dehors de la zone précitée est en métal déposé sur la face du corps de carte, que la face affleurante du circuit intégré présente un motif de lignes conductrices avec à leurs extrémités des pastilles de connexion, l'ensemble de ces lignes et pastilles étant réalisé par métallisation, et que la partie restante de la piste conductrice qui est à l'intérieur de ladite zone précitée est en pâte conductrice déposée par sérigraphie sur la face du corps de carte. Dans ce cas, on doit certes mettre en oeuvre trois étapes successives de fabrication, mais les précisions exigées sont beaucoup moins importantes qu'avec les mises en oeuvre précédentes, de sorte que les machines utilisées sont moins onéreuses.

D'autres caractéristiques et avantages de l'invention apparaîtront plus clairement à la lumière de la description qui va suivre et des dessins annexés, concernant un mode de réalisation particulier, en référence aux figures où :

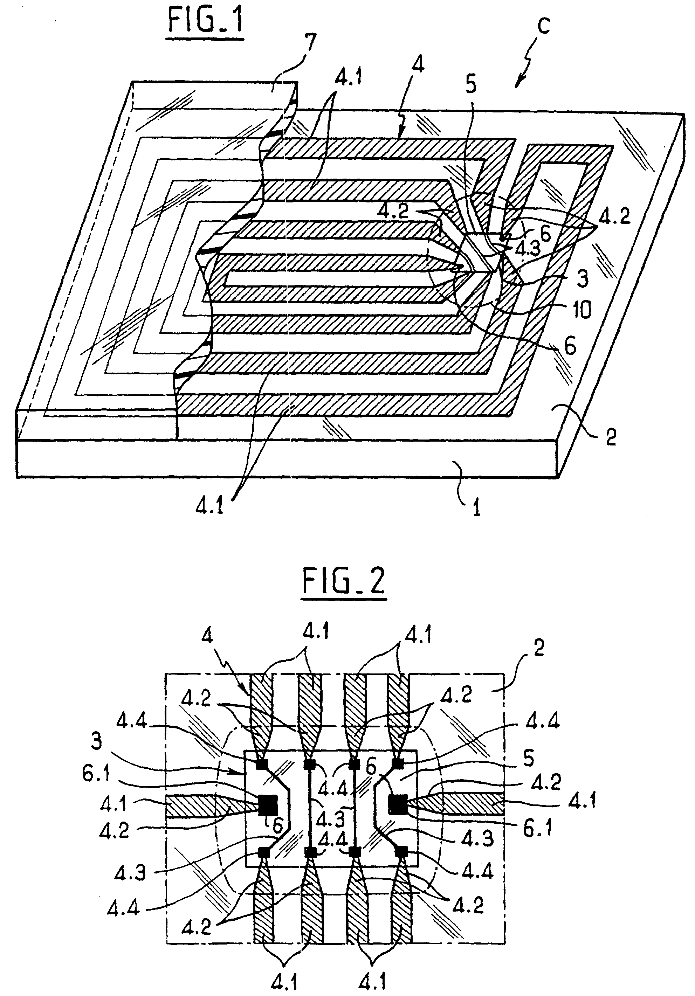

- la figure 1 est une vue en perspective d'une carte sans contact conforme à l'invention, dont la feuille de recouvrement a été en grande partie enlevée afin de mieux distinguer l'agencement de l'antenne de couplage sur la face concernée du corps de carte dans laquelle est enchâssé le circuit intégré ;
- la figure 2 est une vue partielle de dessus, à échelle très agrandie, montrant la zone du circuit intégré, conformément à une variante dans laquelle la face affleurante du circuit intégré présente des lignes conductrices réalisées par métallisation, la partie restante de l'antenne qui se raccorde à ces lignes conductrices étant quant à elle en tout ou partie sérigraphiée sur la face du corps de carte.

Sur la figure 1, on distingue une carte à mémoire C du type sans contact, comportant un corps de carte 1 en matière plastique dans une face 2 duquel est enchâssé un circuit intégré 3, avec sur cette face une antenne de couplage 4 reliée à deux plots de contact 6 du circuit intégré 3, et une feuille de protection isolante 7 recouvrant ladite face du corps de carte. On utilise classiquement un assemblage du corps de carte 1 et de la feuille de recouvrement 7 par laminage à chaud. Le circuit intégré 3 est de façon connue enchâssé dans le corps de carte 1, de telle façon que sa face supérieure présentant les plots de contact 6, laquelle face est notée 5, affleure au niveau de la face concernée 2 du corps de carte 1.

L'antenne de couplage 4 est organisée selon un motif spiralé dont les spires passent sur la face affleurante 5 du circuit intégré 3.

En outre l'antenne est constituée par une piste conductrice dont la largeur est localement réduite dans une zone notée 10, représentée en traits mixtes sur la figure 1, de la face 2 du corps de carte entourant directement le circuit intégré 3 jusqu'à son raccordement à des lignes conductrices très étroites qui sont agencées sur la face affleurante 5 du circuit intégré et qui passent entre les deux plots de contact 6 dudit circuit intégré.

La piste conductrice formant l'antenne 4 est ainsi constituée de tronçons notés 4.1 dont la largeur est aussi grande que possible (dans la pratique, cette largeur pourra atteindre 3 mm dans le cas d'un dépôt de polymère conducteur réalisé par sérigraphie) . Dans la zone restreinte 10, la piste conductrice illustrée présente une largeur localement réduite, ce qui a pour effet d'en augmenter la résistance électrique, comme représenté ici par des tronçons 4.2, avec en l'espèce, pour chacune des spires de la piste conductrice, une largeur progressivement décroissante dans cette zone 10, et ce tant pour la liaison aux plots de contact 6 du circuit intégré 3 que pour leur raccordement aux lignes conductrices passant entre lesdits plots de contact. Le motif spiralé formant l'antenne 4 inclut enfin les lignes conductrices très étroites précitées, notées 4.3, qui sont agencées sur la face affleurante 5 du circuit intégré 3. Les tronçons de largeur progressivement décroissante 4.2 sont bien entendu agencés de façon à se diriger vers les extrémités terminales des lignes conductrices très étroites 4.3 en vue de leur raccordement à celles-ci.

Ainsi que cela a été dit plus haut, la largeur de la piste conductrice peut atteindre 3 mm en dehors de la zone précitée 10, et cette largeur peut descendre à environ 0,2 mm à l'intérieur de ladite zone et au niveau des lignes conductrices 4.3 agencées sur la face affleurante 5 du circuit intégré 3.

Finalement, seuls les tronçons 4.2 de largeur progressivement décroissante et les tronçons 4.3 de largeur très étroite augmentent localement la résistance électrique de la piste conductrice formant l'antenne de couplage. Toutefois, dans la mesure où la zone 10 est réduite, la longueur totale des tronçons 4.2, 4.3 de la piste conductrice 4 ne représentera qu'une faible proportion de la longueur totale de la piste conductrice. Dans la pratique on s'arrangera pour que la longueur des tronçons de plus grande résistance électrique représente au plus 10 % de la longueur totale de la piste conductrice. Il est alors possible d'envisager plusieurs passages ou enjambements de la piste conductrice sur la face affleurante du circuit intégré, avec des lignes conductrices très étroites dont la largeur est par exemple de l'ordre de 0,2 mm, et avec un espacement relatif de l'ordre de 0,15 mm. Sur la figure 1, on a représenté un agencement de piste conductrice avec trois enjambements, mais il va de soi que ce nombre pourra être différent et en particulier être supérieur.

La piste conductrice 4 pourra être réalisée dans son intégralité en polymère conducteur déposé par sérigraphie. Dans ce cas, le processus de fabrication ne comporte qu'une seule étape de sérigraphie, réalisant le dépôt de la piste conductrice à la fois sur la face concernée du corps de carte et sur la face affleurante du circuit intégré qui est enchâssé dans ledit corps de carte. La fabrication est ainsi considérablement simplifiée, et les coûts de production obtenus sont par suite extrêmement compétitifs.

Conformément à une autre variante, il est possible de prévoir une réalisation de la piste conductrice en deux ou trois étapes séparées, dont l'une concerne la formation des lignes conductrices sur la face affleurante du circuit intégré par une technique de métallisation.

Une telle variante sera mieux comprise en se référant à la figure 2, qui illustre un circuit intégré 3 dont la face affleurante 5 présente un motif de lignes conductrices 4.3 avec à leurs extrémités des pastilles de connexion notées 4.4, l'ensemble étant réalisé par métallisation. On notera également la présence de pastilles de contact notées 6.1 au niveau des deux plots de contact 6 du circuit intégré 3, ces deux pastilles étant également réalisées par métallisation. Cette étape de fabrication sera de préférence réalisée avant l'enchâssement du circuit intégré dans le corps de carte, et en particulier directement sur la galette de silicium avant le découpage de celle-ci visant à former des circuits intégrés individuels. On peut alors métalliser en une seule fois des dizaines de milliers de circuits intégrés. Dans ce cas, on enchâsse un circuit intégré présentant déjà le motif désiré de lignes conductrices 4.3 et les pastilles de connexion associées 4.4 et 6.1. Il suffit alors de réaliser la partie restante de la piste conductrice, par exemple en réalisant cette partie restante en polymère conducteur déposé par sérigraphie sur la face 2 du corps de carte, avec un raccordement, à l'aide des tronçons de largeur localement réduite 4.2, des extrémités du motif sérigraphié aux pastilles de connexion déjà présentes sur la face affleurante du circuit intégré.

Bien que ce processus de fabrication implique alors deux étapes séparées, cette solution reste très intéressante dans la mesure où l'on peut réaliser avec une finesse de définition élevée, le motif désiré de lignes conductrices, avec les pastilles de connexion associées, sur la face affleurante du circuit intégré, cette opération de métallisation étant de préférence réalisée sur la galette de silicium complète avant découpage de celle-ci. Il est alors aisé d'obtenir, en même temps qu'une faible résistivité, les ordres de grandeur de largeur précités, avec 0,2 mm pour la largeur très étroite des lignes conductrices 4.3, et un espacement relatif de 0,15 mm.

Selon une autre variante, on peut, tout en conservant la réalisation par métallisation précédemment décrite de lignes conductrices et de pastilles de connexion sur la face affleurante du circuit intégré, réaliser la partie 4.1 de la piste conductrice 4 (qui est en dehors de la zone 10) en métal, notamment en cuivre, déposé sur la face du corps de carte par exemple par une technique classiquement utilisée pour les circuits imprimés, et réaliser la partie restante 4.2 (qui est à l'intérieur de la zone 10) en pâte conductrice déposée par sérigraphie sur la face du corps de carte.

Bien que la fabrication soit alors en apparence plus compliquée du fait de la présence de trois étapes de fabrication, cette variante est intéressante dans la mesure où l'utilisation d'un métal permet de réaliser des tronçons 4.1 moins larges qu'avec un polymère conducteur, et où l'utilisation de pâte conductrice permet de réaliser aisément la liaison locale électrique désirée sans avoir à se préoccuper outre mesure de l'augmentation de la résistance électrique des tronçons 4.2 concernés. De plus, les précisions exigées sont dans ce cas beaucoup moins importantes qu'avec les mises en oeuvre précédentes, de sorte que l'on peut utiliser des machines moins sophistiquées avec des cadences plus grandes, rendant ainsi la carte moins onéreuse.

Des calculs ont été effectués pour comparer la résistance électrique d'une antenne spiralée traditionnelle de 80 cm de longueur, et la résistance électrique d'une antenne de même longueur mais à résistance localement augmentée conformément à l'invention, la longueur totale des tronçons de plus grande résistance électrique représentant environ 5 cm. Ces calculs tendent à montrer que les résistances électriques des antennes sont pratiquement égales dans les deux cas, de sorte en particulier que la faible distance de diminution de section ne perturbe pratiquement pas la grande longueur de l'antenne.

Un tel agencement d'antenne permet ainsi d'avoir un facteur de qualité très satisfaisant tout en permettant une fabrication simplifiée et/ou à forte cadence.

## Revendications

1. Carte à mémoire (C) du type sans contact, comportant un corps de carte (1) en matière plastique dans une face (2) duquel est enchâssé un circuit intégré (3), avec sur cette face une antenne de couplage (4) reliée à deux plots de contact (6) du circuit intégré (3) et organisée selon un motif spiralé dont les spires passent sur la face affleurante (5) du circuit intégré (3), et une feuille de protection isolante (7) recouvrant ladite face du corps de carte, **caractérisée en ce que** l'antenne (4) est constituée par une piste conductrice dont la largeur est localement réduite dans une zone (10) de la face (2) du corps de carte entourant directement le circuit intégré (3) jusqu'à son raccordement à des lignes conductrices très étroites (4.3) par rapport à la piste conductrice extérieure à ladite zone et qui sont agencées sur la face affleurante (5) du circuit intégré (3) et passent entre les deux plots de contact (6) dudit circuit intégré.

2. Carte à mémoire selon la revendication 1, **caractérisée en ce que** la piste conductrice formant l'antenne (4) présente, dans la zone précitée (10), et pour chacune de ses spires, une largeur progressivement décroissante pour leur raccordement aux lignes conductrices (4.3) passant entre les plots de contact (6) du circuit intégré(3).

3. Carte à mémoire selon la revendication 1 ou la revendication 2, **caractérisée en ce que** la piste conductrice formant l'antenne (4) présente, dans la zone précitée (10), une largeur progressivement décroissante pour la liaison aux plots de contact (6) du circuit intégré (3).

4. Carte à mémoire selon la revendication 2 ou la revendication 3, **caractérisée en ce que** la largeur de la piste conductrice peut atteindre 3 mm en dehors de la zone précitée (10), et descend à environ 0,2 mm à l'intérieur de ladite zone et au niveau des lignes conductrices (4.3) agencées sur la face affleurante (5) du circuit intégré (3).

5. Carte à mémoire selon l'une des revendications 2 à 4, **caractérisée en ce que** la longueur des tronçons (4.2, 4.3) de la piste conductrice (4) dont la largeur est réduite représente au plus 10 % de la longueur totale de ladite piste conductrice.

6. Carte a mémoire selon l'une des revendications 2 à 5, **caractérisée en ce que** la piste conductrice (4) est réalisée dans son intégralité en polymère conducteur déposé par sérigraphie.

7. Carte à mémoire selon l'une des revendications 2 à 5, **caractérisée en ce que** la face affleurante (5) du circuit intégré (3) présente un motif de lignes conductrices (4.3) avec à leurs extrémités des pastilles de connexion (4.4), l'ensemble de ces lignes et pastilles étant réalisé par métallisation, et en ce que la partie restante (4.1, 4.2) de la piste conductrice (4) est réalisée en polymère conducteur déposé par sérigraphie sur la face (2) du corps de carte.

8. Carte à mémoire selon l'une des revendications 2 à 5, **caractérisée en ce que** la partie (4.1) de la piste conductrice (4) qui est en dehors de la zone précitée (10) est en métal déposé sur la face (2) du corps de carte, en ce que la face affleurante (5) du circuit intégré (3) présente un motif de lignes conductrices (4.3) avec à leurs extrémités des pastilles de connexion (4.4), l'ensemble de ces lignes et pastilles étant réalisé par métallisation, et en ce que la partie restante (4.2) de la piste conductrice (4) qui est à l'intérieur de ladite zone précitée (10) est en pâte conductrice déposée par sérigraphie sur la face (2) du corps de carte.

## Patentansprüche

1. Kontaktlose Speicherkarte (C), umfassend einen Kartenkörper (1) aus Kunststoff, in dessen eine Seite (2) ein integrierter Schaltkreis (3) eingelassen ist, mit einer auf dieser Seite vorgesehenen Kopplungsantenne (4), die mit zwei Kontaktstücken (6) des integrierten Schaltkreises (3) verbunden und gemäß einem spiralförmigen Muster angeordnet ist, dessen Windungen über die mit der Seite (2) des Kartenkörpers fluchtende Fläche des integrierten Schaltkreises (3) gehen, sowie eine isolierende Schutzfolie (7), welche die genannte Seite des Kartenkörpers überdeckt, **dadurch gekennzeichnet,** daß die Antenne (4) aus einer Leiterbahn gebildet ist, deren Breite in einem den integrierten Schaltkreis (3) direkt umgebenden Bereich (10) der Seite (2) des Kartenkörpers bis zu ihrem Anschluß an bezogen auf die Leiterbahn außerhalb dieses Bereiches sehr schmale leitende Linien (4.3) lokal reduziert ist, die auf der mit der Seite (2) des Kartenkörpers fluchtenden Fläche (5) des integrierten Schaltkreises (3) angeordnet sind und zwischen den beiden Kontaktstücken (6) dieses integrierten Schaltkreises verlaufen.

2. Speicherkarte nach Anspruch 1, **dadurch gekennzeichnet,** daß die Leiterbahn, welche die Antenne (4) bildet, in dem vorgenannten Bereich (10) und für jede ihrer Windungen eine fortschreitend abnehmende Breite für deren Anschluß an die leitenden Linien (4.3) aufweist, die zwischen den Kontaktstücken (6) des integrierten Schaltkreises (3) verlaufen.

3. Speicherkarte nach Anspruch 1 oder Anspruch 2, **dadurch gekennzeichnet,** daß die Leiterbahn, welche die Antenne (4) bildet, in dem vorgenannten Bereich (10) für die Verbindung mit den Kontaktstücken (6) des integrierten Schaltkreises (3) eine fortschreitend abnehmende Breite aufweist.

4. Speicherkarte nach Anspruch 2 oder Anspruch 3, **dadurch gekennzeichnet,** daß die Breite der Leiterbahn außerhalb des vorgenannten Bereiches (10) 3 mm erreichen kann, und innerhalb des genannten Bereichs und in Höhe der leitenden Linien (4.3), die auf der mit der Seite (2) des Kartenkörpers fluchtenden Fläche (5) des integrierten Schaltkreises (3) angeordnet sind, auf etwa 0,2 mm zurückgeht.

5. Speicherkarte nach einem der Ansprüche 2 bis 4, **dadurch gekennzeichnet, daß** die Länge der Abschnitte (4.2, 4.3) der Leiterbahn (4), deren Breite verringert ist, höchstens 10 % der Gesamtlänge der genannten Leiterbahn ausmacht.

6. Speicherkarte nach einem der Ansprüche 2 bis 5, **dadurch gekennzeichnet, daß** die Leiterbahn (4) vollständig aus leitendem Polymer hergestellt ist, das durch Siebdruck aufgebracht wird.

7. Speicherkarte nach einem der Ansprüche 2 bis 5, **dadurch gekennzeichnet, daß** die mit der Seite (2) des Kartenkörpers fluchtende Fläche (5) des integrierten Schaltkreises (3) ein Muster aus leitenden Linien (4.3) aufweist, die an ihren Enden Anschlußflächen (4.4) haben, wobei die Einheit aus diesen Linien und Anschlußflächen durch Metallisieren erzeugt wird, und daß der restliche Teil (4.1, 4.2) der Leiterbahn (4) aus einem leitenden Polymer hergestellt ist, das durch Siebdruck auf die Seite (2) der Kartenkörpers aufgebracht wird.

8. Speicherkarte nach einem der Ansprüche 2 bis 5, **dadurch gekennzeichnet,** daß der Teil (4.1) der Leiterbahn (4), der außerhalb des vorgenannten Bereiches (10) ist, aus Metall ist, das auf die Seite (2) des Kartenkörpers aufgebracht wird, daß die mit der Seite (2) des Kartenkörpers fluchtende Fläche (5) des integrierten Schaltkreises (3) ein Muster aus leitenden Linien (4.3) aufweist, die an ihren Enden Anschlußflächen (4.4) haben, wobei die Einheit aus diesen Linien und Anschlußflächen durch Metallisieren erzeugt wird, und daß der restliche Teil (4.2) der Leiterbahn (4), der innerhalb des vorgenannten Bereiches (10) ist, aus Leitpaste ist, die durch Siebdruck auf die Seite (2) des Kartenkörpers aufgebracht wird.

## Claims

1. A memory card (C) of the contactless type, comprising a card body (1) of plastics material having an integrated circuit (3) embedded in one face (2) thereof, with a coupling antenna (4) on said face being connected to two contact pads (6) of the integrated circuit (3), and organized as a spiral pattern whose turns pass over the flush face (5) of the integrated circuit (3), and an insulating protective sheet (7) covering said face of the card body, the card being **characterized in that** the antenna (4) is constituted by a conductive track whose width is locally decreased in a zone (10) of the face (2) of the card body directly surrounding the integrated circuit (3) to connection with conductive lines (4.3) that are very narrow compared with the conductive track outside said zone and organized on the flush face (5) of the integrated circuit (3) and passing between the two contact pads (6) of said integrated circuit.

2. A memory card according to claim 1, **characterized in that** the antenna-forming conductive track (4) presents, in the above-specified zone (10), and for each of its turns, a width that decreases progressively for connection to the conductive lines (4.3) passing between the contact pads (6) of the integrated circuit (3).

3. A memory card according to claim 1 or claim 2, **characterized in that** the antenna-forming conductive track (4) presents, in the above-specified zone (10), a width that decreases progressively for connection to the contact pads (6) of the integrated circuit (3).

4. A memory card according to claim 2 or claim 3, **characterized in that** the width of the conductive track can be as great as 3 mm outside the above-specified zone (10), and decreases to about 0.2 mm inside said zone close to the conductive lines (4.3) organized on the flush face (5) of the communication (3).

5. A memory card according to any one of claims 2 to 4, **characterized in that** the length of the segments (4.2, 4.3) of the conductive track (4) having decreased width constitutes no more than 10% of the total length of said conductive track.

6. A memory card according to any one of claims 2 to 5, **characterized in that** the conductive track (4) is made completely out of conductive polymer deposited by silkscreen printing.

7. A memory card according to any one of claims 2 to 5, **characterized in that** the flush face (5) of the integrated circuit (3) presents a pattern of conductive lines (4.3) with connection lands (4.4) at their ends, all of said lines and lands being made by metallization, and in that the remaining portion (4.1, 4.2) of the conductive track (4) is made of conductive polymer deposited by silkscreen printing on the face (2) of the card body.

8. A memory card according to any one of claims 2 to 5, **characterized in that** the portion (4.1) of the conductive track (4) outside the above-mentioned zone (10) is made of metal deposited on the face (2) of the card body, in that the flush face (5) of the integrated circuit (3) presents a pattern of conductive lines (4.3) with connection lands (4.4) at their ends, all of said lines and lands being made by metallization, and in that the remaining portion (4.2) of the conductive track (4) which is inside said above-mentioned zone (10) is made of conductive paste deposited by silkscreen printing on the face (2) of the card body.
